# EUROPÄISCHE PATENTSCHRIFT

(11) **EP 1 784 907 B1**
(45) Veröffentlichungstag und Bekanntmachung des Hinweises auf die Patenterteilung: **11.03.2009**
(21) Anmeldenummer: 05787018.0
(22) Anmeldetag: 12.08.2005
(51) Int. Cl.: H02K 5/173

(54) **ELEKTRISCHE MASCHINE MIT EINEM AXIALEN FEDERELEMENT**
ELECTRIC MACHINE COMPRISING AN AXIAL SPRING-LOADED ELEMENT
MACHINE ELECTRIQUE A ELEMENT ELASTIQUE AXIAL

(30) Priorität: 25.08.2004 DE 102004041074
(43) Veröffentlichungstag der Anmeldung: 16.05.2007
(73) Patentinhaber: ROBERT BOSCH GMBH, 70442 Stuttgart (DE)
(72) Erfinder: HEYDER, Martin, 77815 Buehl (DE)
(86) Internationale Anmeldenummer: PCT/EP2005/053978
(87) Internationale Veröffentlichungsnummer: WO 2006/021523

(56) Entgegenhaltungen:
- EP-A- 0 303 147
- EP-A- 0 549 274
- PATENT ABSTRACTS OF JAPAN Bd. 2000, Nr. 14, 5. März 2001 (2001-03-05) & JP 2000 308305 A (ASMO CO LTD), 2. November 2000 (2000-11-02) in der Anmeldung erwähnt & JP 2000 308305 A (ASMO CO LTD) 2. November 2000 (2000-11-02)

## Beschreibung

### Stand der Technik

Die Erfindung betrifft eine elektrische Maschine mit einem axialen Federelement sowie ein axiales Federelement nach der Gattung der unabhängigen Ansprüche.

Mit der JP 2000 30 8305 A ist ein Elektromotor (mit den Merkmalen des Oberbegriffs des Anspruchs 1) bekannt geworden, bei dem ein Rotor mittels eines Kugellagers in einem Gehäuse gelagert ist. Zwischen dem Kugellager und dem Rotor ist auf der Rotorwelle eine Unterlegscheibe angeordnet, die den Rotor axial gegenüber dem Kugellager abstützt. Dabei weist die Unterlegscheibe ein Ringteil auf, an dem radial abstehende Federteile angeformt sind, die sich federnd am Rotorkern abstützen. Bei einer solchen Ausführung muss die Unterlegscheibe in einem separaten Verfahrensschritt montiert werden, was aufgrund der Führung der Unterlegscheibe auf der Rotorwelle Probleme durch das Verkanten der Unterlegscheibe führen kann.

### Vorteile der Erfindung

Die erfindungsgemäße elektrische Maschine und das erfindungsgemäße axiale Federelement mit den kennzeichnenden Merkmalen der unabhängigen Ansprüche haben den Vorteil, dass durch die Ausbildung eines Außenrings, der federnd mit dem Innenring des Federelements verbunden ist, dieses sicher an einem Rotor-Bauteil befestigbar ist. Dadurch kann das Federelement günstig in einem Montageschritt zusammen mit dem Rotor-Bauteil auf der Rotorwelle angeordnet werden. Da das Federelement am Rotor-Bauteil schon bei dessen Montage fest verbunden bleibt, kann die Toleranz zwischen dem Innenring und der Rotorwelle entsprechend groß gewählt werden, so dass der Klemmring bei dessen Montage auf die Rotorwelle nicht verkanten kann. Im Gegensatz zu einem Federelement mit radial abstehenden Enden, wird durch den Außenring ein gegenseitiges Verhaken der Federelemente bei deren Transport vermieden.

Durch die in den Unteransprüchen aufgeführten Maßnahmen ergeben sich vorteilhafte Weiterbildungen und Verbesserungen der in den unabhängigen Ansprüchen angegebenen Merkmalen. Durch die elastische Verbindung des Innenrings mit dem Außenring kann das Federelement einerseits mit dem Außenring fest an einem Rotor-Bauteil befestigt werden, und andererseits eine axiale federnde ringförmige Anschlagsfläche zur Anlage an einem Lager zur Verfügung stellen.

Durch die Befestigung des Federelements am Rotor-Bauteil kann der Innenring radial recht schmal ausgebildet werden, so dass dieser sich auf der Lagerseite ausschließlich an dem mit der Ankerwelle verbundenen Innenteil des Lagers abstützt. Dadurch wird eine Reibung zwischen dem Innenteil und dem Außenteil des Lagers über dessen Dichtscheibe verhindert, wodurch der Wirkungsgrad der elektrischen Maschine erhöht wird.

Besonders günstig ist es, die federnden Stege zwischen dem Innen- und dem Außenring spiralförmig auszubilden, so dass sich bei einer axialen Belastung des Federelements dessen Außendurchmesser nicht vergrößert. Der axiale Federweg wird hingegen durch ein Verdrehen des Außenrings gegenüber dem Innenring zur Verfügung gestellt, wodurch der benötigte radiale Bauraum reduziert wird.

Bildet der Durchmesser des Innenrings mit dem Außendurchmesser der Rotorwelle eine Spielpassung, vereinfacht sich die axiale Montage, sowie der axiale Spielausgleich des Federelements deutlich, da das Federelement dann nicht auf der Rotorwelle verkantet. Ein solches radiales Spiel zwischen Ankerwelle und Innenring ist möglich, da die radiale Führung des Federelements nicht von der Rotorwelle, sondern vom Rotor-Bauteil übernommen wird.

Weist der Außenring des Federelements eine umlaufende - insbesondere über den Umfang geschlossene - Außenwand auf, so kann diese in eine entsprechende Aussparung des Rotor-Bauteils eingepresst werden, um das Federelement fest an diesem Rotor-Bauteil zu fixieren. Eine solche umlaufende radiale Außenwand verhindert auch das Verhaken der Federelemente untereinander bei deren Transport.

Der Außenring, insbesondere mit der umlaufenden Außenwand, ermöglicht auch weitere verfahrenstechnisch günstige Befestigungsmöglichkeiten des Federelements an dem Bauteil des Rotors. So kann der Außenring beispielsweise in einen Hinterschnitt oder in ein Rastelement des Rotor-Bauteils greifen. Ebenso kann der Außenring zusammen mit dem Rotor-Bauteil als Bajonettverbindung ausgebildet werden, oder mittels einer plastischen Materialumformung des Rotor-Bauteils an diesem befestigt werden. Dadurch entfällt ein separater Montageschritt zur Befestigung des Federelements.

Besonders günstig kann der Außenring direkt an der Stirnseite des Ankerlamellen-Paket befestigt werden, das in einfacher Weise auf die Rotorwelle montierbar ist. Die Rotorwelle wird dann mittels des Wälzlagers im Poltopf eines Elektromotors gelagert.

Zum Ausgleich von Materialausdehnungen der elektrischen Maschine ist das Wälzlager, an dem das axiale Federelement anliegt, als Loslager ausgebildet. Hierbei ist beispielsweise der fest auf der Rotorwelle angeordnete Innenteil des Kugellagers in gewissen Grenzen gegenüber dem Außenteil axial beweglich. Durch die Anordnung eines solchen Loslagers an einem Ende der Rotorwelle kann diese an einer anderen Stelle mittels eines einfach zu fertigenden Festlagers im Gehäuse gelagert werden, ohne dass dadurch die Lagerung der Ankerwelle überbestimmt ist.

Das erfindungsgemäße axiale Federelement eignet sich für jegliche Lagerung einer Welle mit einem drehfest angeordneten Bauteil in einer entsprechenden Lageraufnahme. Da der formstabile Außenring relativ einfach an Wellen-Bauteilen zumindest axial fixiert werden kann, steht durch den elastisch mit diesem verbundenen Innenring eine Abstützfläche für ein ringförmiges Lagerbauteil zur Verfügung. Dadurch kann insbesondere bei einem als Loslager ausgebildeten Kugellager mit spielbehaftetem Schiebesitz des Innenteils auf der Rotorwelle das Innenteil zur Geräusch- und Verschleißminimierung axial verspannt werden. Aufgrund der spiralförmig ausgebildeten, elastischen Verbindungsstegen bleibt der Außendurchmesser des Federelements in vorteilhafter Weise konstant.

### Zeichnungen

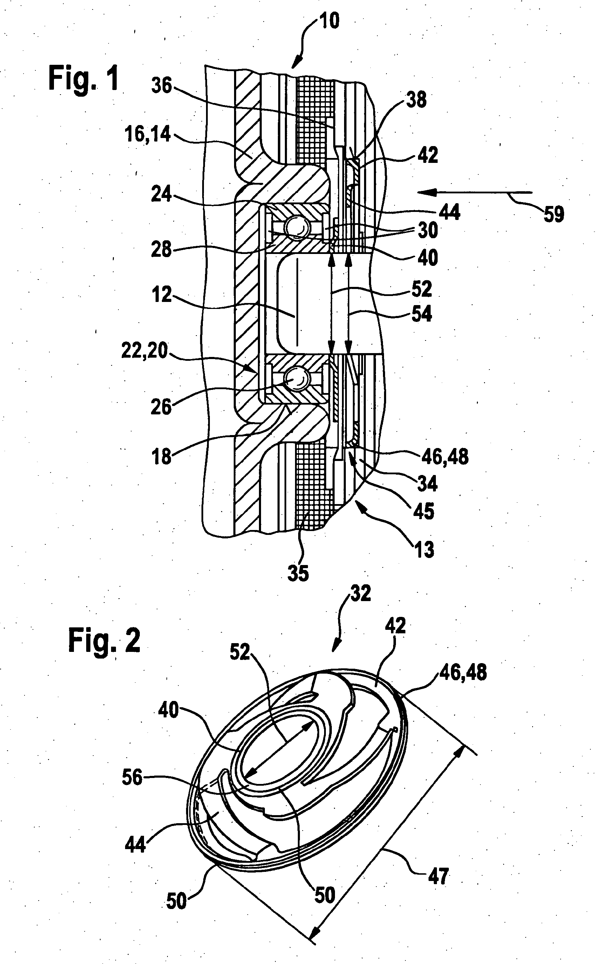

In den Zeichnungen sind verschiedene Ausführungsbeispiele einer erfindungsgemäßen Vorrichtung dargestellt und in der nachfolgenden Beschreibung näher erläutert. Es zeigen Figur 1 ein Ausschnitt einer elektrischen Maschine im Schnitt,
Figur 2 ein erfindungsgemäßes axiales Federelement gemäß Figur 1 und
Figur 3 und 4 weitere Ausführungsbeispiele gemäß der Darstellung von Figur 1.

### Beschreibung der Ausführungsbeispiele

In Figur 1 ist eine elektrische Maschine 10 dargestellt, bei der ein eine Rotorwelle 12 aufweisender Rotor 13 in einem als Poltopf 14 ausgebildeten Gehäuseteil 16 gelagert ist. Im Gehäuseteil 16 ist eine Lageraufnahme 18 ausgebildet, in der ein als Kugellager 20 ausgebildetes Wälzlager 22 angeordnet ist. Das Wälzlager 22 weist ein Außenteil 24 auf, das radial an der Lageraufnahme 18 anliegt. Ein Innenteil 28 ist mittels Wälzkörper 26 gegenüber dem Außenteil 24 drehbar, wobei die Wälzkörper 26 mittels Dichtscheiben 30 abgedeckt sind. Das Innenteil 28 nimmt die Rotorwelle 12 auf, wobei das Wälzlager 22 als Loslager ausgebildet ist, wodurch die Rotorwelle 12 gegenüber dem Gehäuseteil 16 axial leicht verschiebbar ist. Zur axialen Verspannung der Rotorwelle 12 gegenüber dem Wälzlager 22 ist auf dem Rotor 13 ein axiales Federelement 32 angeordnet, das sich einerseits am Innenteil 28 des Wälzlagers 22 und andererseits an einem drehfest auf der Rotorwelle 12 angeordneten Rotor-Bauteil 34 abstützt. Das Rotor-Bauteil 34 ist beispielsweise als Ankerlamellen-Paket 34 zur Aufnahme elektrischer Wicklungen 35 ausgebildet und weist an seiner Stirnseite 36 eine ringförmige Aussparung 38 auf, in der das axiale Federelement 32 zumindest axial fixiert ist. Das Federelement 32 weist einen Innenring 40 und einen Außenring 42 auf, die mittels spiralförmigen, axial federnden Stegen 44 miteinander verbunden sind. Der Außenring 42 weist im Ausführungsbeispiel eine umlaufende Außenwand 46 auf, die einen radialen Presssitz 45 mit der Aussparung 38 des Rotor-Bauteils 34 bildet. Das Federelement 32 ist hier als Stanzbiegeteil aus Federstahl hergestellt und weist im Bereich der umlaufenden Wand 46 als Versteifung 48 eine Bördelung 50 oder Sicken 50 auf. Am Innenring 40 weist das Federelement 32 einen Innendurchmesser 52 auf, der größer ist als der Durchmesser 54 der Rotorwelle 12. Am Innenring 40 ist des weiteren eine axiale Anlagefläche 56 zur Abstützung am Wälzlager 22 ausgebildet, deren Außendurchmesser 58 derart bemessen ist, dass die Anlagefläche 56 nur am Innenteil 40 des Wälzlagers 22 anliegt. Dabei berührt die axiale Anlagefläche 56 nicht die Dichtscheibe 30 oder das Außenteil 24 des Wälzlagers 22, um Reibungsverluste zwischen den drehenden Rotor 13 und dem drehfesten Außenteil 24 zu vermeiden.

Zur Montage der elektrischen Maschine 10 wird das axiale Federelement 32 zumindest axial am vormontierten Rotor 13 fixiert. Beispielsweise wird der Außenring 42 in die Aussparung 38 des drehfest mit der Rotorwelle 12 verbundenen Rotor-Bauteils 34 eingepresst. Dadurch ist das Federelement 32 auch bei einem größeren Durchmesser 52 des Innenrings 40 als der Außendurchmesser 54 der Rotorwelle 12 zuverlässig am Rotor 13 fixiert, so dass der Rotor 13 auch über Kopf, mittels sogenannter "blinder Montage" in des vorab im Gehäuseteil 16 vormontierte Wälzlager 22 eingeführt werden kann. Aufgrund der axialen Montagekraft 59 kann die axiale Vorspannung des Federelements 32 eingestellt werden. Bei thermischer Ausdehnung im Betrieb ist dann der Anker 13 unter Beibehalt einer axialen Spannkraft gegenüber dem Gehäuseteil 16 verschiebbar, ohne dass das Federelement 32 sich an der Rotorwelle 13 verkantet. Ebenso tritt dadurch beim Aufbringen der axialen Vorspannkraft kein Kraftverlust durch Reibung auf.

Figur 2 zeigt das axiale Federelement 32 aus Figur 1 vor dessen Einbau in die elektrische Maschine 10. Der Außenring 42 und der Innenring 40 sind konzentrisch zueinander angeordnet, wobei der Innendurchmesser 52 größer ausgebildet ist als der Außendurchmesser 54 der Rotorwelle 12. Die spiralförmigen Stege 44 sind derart angeordnet, dass beim Einwirken einer axialen Kraft 59 sich die radialen Abmessungen des Federelements 32 (Innendurchmesser 52, Außendurchmesser 47 der umlaufenden Wand 46) nur unwesentlich ändern. Hingegen wird der axiale Federweg durch eine Verdrehung der Innenrings 40 gegenüber dem Außenring 42 zur Verfügung gestellt. Im Ausführungsbeispiel sind drei spiralförmigen Streben 44 ausgestanzt, deren Anzahl und Form kann aber je nach Anwendung variiert werden. Die axiale Anlagefläche 56 am Innenring 40 ist durch einen geringen axialen Versatz 50 ausgebildet, der gleichzeitig eine Versteifung 48 für den Innenring 40 bildet. Durch die Versteifungselemente 48, die beispielsweise auch als Bördelung 50, Sicke 50 oder axialer Absatz 50 ausgebildet sein können, wird eine radiale Deformation des Federelements 32 verhindert

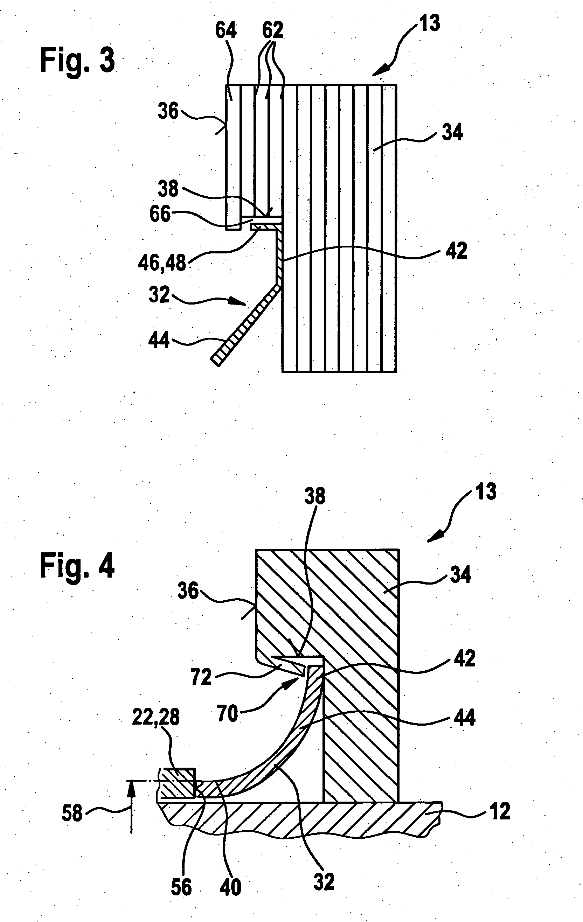

In Figur 3 ist ein weiteres Ausführungsbeispiel eines axialen Federelements 32 dargestellt, dass mittels eines Hinterschnitts 66 mit dem Rotor-Bauteil 34 verbunden ist. Das Rotor-Bauteil 34 ist hierbei als Lamellenpaket ausgebildet, wobei zur Ausformung der Aussparung 38 einige Lamellenschichten 62 eine größere ringförmige Aussparung 38 aufweisen, als die oberstes Lamellenschicht 64 an der Stirnseite 36 des Rotor-Bauteils 34. Hierdurch wird der Hinterschnitt 66 gebildet, in dem das elastische Federelement 32 eingeschoben werden kann. Dadurch kann das Federelement 32 axial selbstsichernd am Rotor-Bauteil 34 axial und radial fixiert werden. In diesem Ausführungsbeispiel weist das Federelement 32 ein geringes radiales und axiales Spiel gegenüber dem Rotor-Bauteil 34 auf, was jedoch die Wirkungsweise des axialen Federelements 32 nicht beeinträchtigt.

In einem weiteren Ausführungsbeispiel gemäß Figur 4 sind am Rotor-Bauteil 34 Rastelemente 70, beispielsweise aus Kunststoff, angeordnet, in die der Außenring 42 des axialen Federelements 32 verrastbar einfügbar ist. Auch hierdurch wird eine zuverlässige axiale Fixierung des Federelemts 32 am Anker 13 geschaffen, die eine Abstützung des Innenrings 40 am Innenteil 28 des Wälzlagers 22 ermöglicht, ohne an der Rotorwelle 12 zu reiben.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann beispielsweise die konkrete Ausgestaltung des Gehäuseteils 16, des Wälzlagers 22 oder des Rotor-Bauteils 34 beliebig variiert werden. Ebenso kann die Ausbildung des axialen Federelements 32 den erforderlichen axialen Vorspannkräften und den Abmessungen des Rotor-Bauteils 34, sowie des Wälzlagers 22 angepasst werden. Zur axialen Sicherung des Federelementes 32 am Rotor-Bauteil 34 kann anstelle der Presspassung 45, des Hinterschnitts 66 oder der Rastverbindung 70 auch eine Bajonett-Verbindung , eine plastische Materialumformung oder gleichwirkende Verbindungsmittel verwendet werden. Das erfindungsgemäße Federelement 32 und die erfindungsgemäße elektrische Maschine 10 eignet sich in besonderer Weise zum Antreiben von Funktionselementen im Kraftfahrzeug, beispielsweise für Verstellmotoren von beweglichen Teilen, oder Gebläse- oder Pumpenmotoren, wie sie beispielsweise beim Anti-Blockier-System zum Einsatz kommen.

## Patentansprüche

1. Elektrische Maschine (10), insbesondere zum Antreiben von Funktionselementen im Kraftfahrzeug, mit einer Rotorwelle (12), die drehbar mittels einem Wälzlager (22, 20) in einem Gehäuseteil (16) eines Gehäuses gelagert ist, wobei ein axiales Federelement (32) zwischen dem Wälzlager (22, 20) und einem auf der Rotorwelle (12) angeordneten Rotor-Bauteil (34) angeordnet ist, wobei
das axiale Federelement (32) einen Innenring (40) aufweist, **dadurch gekennzeichnet, dass** das axiale Federelement (32) einen Außenring (42) aufweist, wobei der Innenring (40) und des Außenring (42) miteinander axial federnd verbunden sind, und der Außenring (42) mit dem Rotor-Bauteil (34) verbunden ist.

2. Elektrische Maschine (10) nach Anspruch 1, **dadurch gekennzeichnet, dass** der Innenring (40) und der Außenring (42) des Federelements (32) mittels federnder Stege (44) miteinander verbunden sind.

3. Elektrische Maschine (10) nach einem der Ansprüche 1 oder 2, **dadurch gekennzeichnet, dass** das Wälzlager (22, 20) ein die Rotorwelle (12) aufnehmendes Innenteil (28) und ein im Gehäuseteil (16) gelagertes Außenteil (24) aufweist, und sich der Innenring (40) des Federelements (32) axial am Innenteil (28) - und insbesondere nicht am Außenteil (24) - des Wälzlagers (22, 20) abstützt.

4. Elektrische Maschine (10) nach einem der vorhergehenden Ansprüche, **dadurch gekennzeichnet, dass** die federnden Stege (44) spiralförmig um die Rotorwelle (12) angeordnet sind und insbesondere bei einer axialen Belastung des Federelements (32) der Innenring (40) gegen den Außenring (42) drehbar ist.

5. Elektrische Maschine (10) nach einem der vorhergehenden Ansprüche, **dadurch gekennzeichnet, dass** der Innenring (40) einen größeren Innendurchmesser (52) aufweist als der Außendurchmesser (54) der Rotorwelle (12) und sich der Innenring (40) nicht an der Rotorwelle (12) abstützt.

6. Elektrische Maschine (10) nach einem der vorhergehenden Ansprüche, **dadurch gekennzeichnet, dass** der Außenring (42) eine radiale, umlaufende Außenwand (46) aufweist, die eine Pressverbindung (45) mit einer zylindrischen Aussparung (38) in dem Rotor-Bauteil (34) bildet.

7. Elektrische Maschine (10) nach einem der vorhergehenden Ansprüche, **dadurch gekennzeichnet, dass** der Außenring (42) mittels einer Rastverbindung (70), einem Hinterschnitt (66), einer Bajonettverbindung oder einer Materialumformung axial am Rotor-Bauteil (34) fixiert ist.

8. Elektrische Maschine (10) nach einem der vorhergehenden Ansprüche, **dadurch gekennzeichnet, dass** das Rotor-Bauteil (34) als ein Ankerlamellen-Paket und das Gehäuseteil (16) als ein Poltopf (14) ausgebildet ist.

9. Elektrische Maschine (10) nach einem der vorhergehenden Ansprüche, **dadurch gekennzeichnet, dass** das Wälzlager (22, 20) als ein am Ende der Rotorwelle (12) angeordnetes Loslager (22, 20) ausgebildet ist, und die Rotorwelle (12) zusätzlich mittels mindestens einem Festlager im Gehäuse gelagert ist.

10. Axiales Federelement (32), insbesondere nach einem der vorhergehenden Ansprüche, **dadurch gekennzeichnet, dass** das axiale Federelement (32) einen Innenring (40) und einen konzentrischen Außenring (42) mit größerem Durchmesser (47) aufweist, die miteinander mittels spiralförmig angeordneten elastischen Stegen (44) axial federnd verbunden sind, und der Außenring (42) eine Versteifung (48, 50) aufweist, um den Außenring (42) an einem Rotor-Bauteil (34) axial zu fixieren.

## Claims

1. Electric machine (10), in particular for the driving of functional elements in a motor vehicle, with a rotor shaft (12) which is mounted rotatably in a housing part (16) of a housing by means of a rolling bearing (22, 20), an axial spring element (32) being arranged between the rolling bearing (22, 20) and a rotor component (34) arranged on the rotor shaft (12), the axial spring element (32) having an inner ring (40), **characterized in that** the axial spring element (32) has an outer ring (42), the inner ring (40) and the outer ring (42) being connected to one another axially resiliently, and the outer ring (42) being connected to the rotor component (34).

2. Electric machine (10) according to Claim 1, **characterized in that** the inner ring (40) and the outer ring (42) of the spring element (32) are connected to one another by means of resilient webs (44).

3. Electric machine (10) according to either one of Claims 1 and 2, **characterized in that** the rolling bearing (22, 20) has an inner part (28) receiving the rotor shaft (12) and an outer part (24) mounted in the housing part (16), and the inner ring (40) of the spring element (32) is supported axially on the inner part (28), and particularly not on the outer part (24), of the rolling bearing (22, 20).

4. Electric machine (10) according to one of the preceding claims, **characterized in that** the resilient webs (44) are arranged spirally around the rotor shaft (12), and, particularly under axial loading of the spring element (32), the inner ring (40) is rotatable with respect to the outer ring (42).

5. Electric machine (10) according to one of the preceding claims, **characterized in that** the inner ring (40) has a larger inside diameter (52) than the outside diameter (54) of the rotor shaft (12), and the inner ring (40) is not supported on the rotor shaft (12).

6. Electric machine (10) according to one of the preceding claims, **characterized in that** the outer ring (42) has a radial continuous outer wall (46) which forms a press connection (45) with a cylindrical clearance (38) in the rotor component (34).

7. Electric machine (10) according to one of the preceding claims, **characterized in that** the outer ring (42) is fixed axially to the rotor component (34) by means of a latching connection (70), an undercut (66), a bayonet connection or a material forming.

8. Electric machine (10) according to one of the preceding claims, **characterized in that** the rotor component (34) is designed as an armature lamination bundle and the housing part (16) is designed as a pole pot (14).

9. Electric machine (10) according to one of the preceding claims, **characterized in that** the rolling bearing (22, 20) is designed as a loose bearing (22, 20) arranged at the end of the rotor shaft (12), and the rotor shaft (12) is additionally mounted in the housing by means of at least one fixed bearing.

10. Axial spring element (32), in particular according to one of the preceding claims, **characterized in that** the axial spring element (32) has an inner ring (40) and a concentric outer ring (42) with a larger diameter (47), which rings are connected to one another axially resiliently by means of spirally arranged elastic webs (44), and the outer ring (42) has a reinforcement (48, 50) in order to fix the outer ring (42) axially to a rotor component (34).

## Revendications

1. Machine électrique (10), notamment pour entraîner des éléments fonctionnels dans un véhicule automobile, comprenant un arbre de rotor (12), qui est monté à rotation au moyen d'un palier à roulement (22, 20) dans une partie de boîtier (16) d'un boîtier, un élément de ressort axial (32) étant disposé entre le palier à roulement (22, 20) et un composant de rotor (34) disposé sur l'arbre de rotor (12),
l'élément de ressort axial (32) présentant une bague interne (40),
**caractérisée en ce que**
l'élément de ressort axial (32) présente une bague externe (42), la bague interne (40) et la bague externe (42) étant connectées de manière élastique axialement l'une à l'autre, et la bague externe (42) étant connectée au composant de rotor (34).

2. Machine électrique (10) selon la revendication 1, **caractérisée en ce que** la bague interne (40) et la bague externe (42) de l'élément de ressort (32) sont connectées l'une à l'autre au moyen de nervures élastiques (44).

3. Machine électrique (10) selon l'une quelconque des revendications 1 ou 2, **caractérisée en ce que** le palier à roulement (22, 20) présente une partie interne (28) recevant l' arbre de rotor (12) et une partie externe (24) montée dans la partie de boîtier (16), et la bague interne (40) de l'élément de ressort (32) s'appuie axialement sur la partie interne (28), et notamment pas sur la partie externe (24), du palier à roulement (22, 20).

4. Machine électrique (10) selon l'une quelconque des revendications précédentes, **caractérisée en ce que** les nervures élastiques (44) sont disposées en spirale autour de l'arbre de rotor (12) et en particulier, dans le cas d'une contrainte axiale de l'élément de ressort (32), la bague interne (40) peut être tournée contre la bague externe (42) .

5. Machine électrique (10) selon l'une quelconque des revendications précédentes, **caractérisée en ce que** la bague interne (40) présente un plus gros diamètre intérieur (52) que le diamètre extérieur (54) de l'arbre du rotor (12) et la bague interne (40) ne s'appuie pas sur l'arbre de rotor (12).

6. Machine électrique (10) selon l'une quelconque des revendications précédentes, **caractérisée en ce que** la bague externe (42) présente une paroi radiale extérieure (46) qui forme une connexion par pressage (45) avec un évidement cylindrique (38) dans le composant de rotor (34).

7. Machine électrique (10) selon l'une quelconque des revendications précédentes, **caractérisée en ce que** la bague externe (42) est fixée axialement au composant de rotor (34) au moyen d'une connexion par encliquetage (70), une contre-dépouille (66), une connexion par baïonnette ou une déformation de matériau.

8. Machine électrique (10) selon l'une quelconque des revendications précédentes, **caractérisée en ce que** le composant de rotor (34) est réalisé sous forme de paquet de lamelles d'induit et la partie de boîtier (16) est réalisée sous forme d'élément polaire en forme de pot (14).

9. Machine électrique (10) selon l'une quelconque des revendications précédentes, **caractérisée en ce que** le palier à roulement (22, 20) est réalisé sous forme de palier libre (22, 20) disposé à l'extrémité de l'arbre de rotor (12), et l'arbre de rotor (12) est monté dans le boîtier en outre au moyen d'au moins un palier fixe.

10. Elément de ressort axial (32), en particulier selon l'une quelconque des revendications précédentes, **caractérisé en ce que** l'élément de ressort axial (32) présente une bague interne (40) et une bague externe concentrique (42) de plus grand diamètre (47), qui sont connectées l'une à l'autre de manière axialement élastique au moyen de nervures élastiques (44) disposées en spirale, et la bague externe (42) présente un renforcement (48, 50) pour fixer axialement la bague externe (42) sur un composant de rotor (34).
